# EUROPÄISCHE PATENTSCHRIFT

(11) **EP 2 269 289 B1**
(45) Veröffentlichungstag und Bekanntmachung des Hinweises auf die Patenterteilung: **27.11.2019**
(21) Anmeldenummer: 09731913.1
(22) Anmeldetag: 20.03.2009
(51) Int. Cl.: H02K 49/04, B60L 13/04, H02K 7/06, H02K 41/025

(54) **TRANSPORTVORRICHTUNG**
TRANSPORT DEVICE
DISPOSITIF DE TRANSPORT

(30) Priorität: 16.04.2008 DE 102008019319
(43) Veröffentlichungstag der Anmeldung: 05.01.2011
(73) Patentinhaber: SEW-EURODRIVE GmbH & Co. KG, 76646 Bruchsal (DE)
(72) Erfinder: SCHMIDT, Josef, 76676 Graben-Neudorf (DE); BECKER, Günter, 76684 Östringen (DE); SCHWESINGER, Klaus, 76646 Bruchsal (DE); LAUBENSTEIN, Udo, 76297 Stutensee (DE)
(86) Internationale Anmeldenummer: PCT/EP2009/002061
(87) Internationale Veröffentlichungsnummer: WO 2009/127308

(56) Entgegenhaltungen:
- EP-A1- 1 232 974
- WO-A2-03/091132
- US-A- 3 903 808
- US-B2- 6 510 799
- US-B2- 6 899 036

## Beschreibung

Die Erfindung betrifft eine Transportvorrichtung.

Aus der US 6 510 799 B2 und der US 6 899 036 B2 ist ein Wirbelstromantrieb bekannt.

Aus der WO 03/091132 A2 ist ein Verfahren zum Anheben eines Objekts bekannt.

Aus der US 3 903 808 A ist ein Wirbelstromantriebssystem bekannt.

Der Erfindung liegt daher die Aufgabe zugrunde, eine Transportvorrichtung mit hoher Standzeit weiterzubilden.

Erfindungsgemäß wird die Aufgabe bei der Transportvorrichtung nach den in Anspruch 1 oder 2 angegebenen Merkmalen gelöst.

Von Vorteil ist dabei, dass ein starkes Feld möglichst exakt in axialer Richtung erzeugbar ist im Fall der Ruhe der Drehscheiben, also Drehzahl Null. Auf diese Weise ist bei Eintauchen der Reaktionsfläche eine Vorschubskraft erzeugbar, die im Wesentlichen in Fahrtrichtung gerichtet ist und somit möglichst wenig Querkräfte aufweist. Insbesondere ist somit eine mechanische oder elektromagnetische Zentrierung ausführbar, mit der ein möglichst kleiner Luftspalt erreichbar ist und auch bei Abweichungen des Reaktionsteils von seiner Ideallage eine hohe Sicherheit gegen Berührung und somit Verschleiß gewährleistet. Auf diese Weise ist eine hohe Standzeit erreichbar.

Erfindungsgemäß ist ein Federelement zwischen den Drehscheiben angeordnet. Von Vorteil ist dabei, dass ein möglichst kleiner Luftspalt erreichbar ist.

Bei einer vorteilhaften Ausgestaltung sind die Drehscheiben axial relativ zueinander bewegbar angeordnet, insbesondere ist also zumindest eine der Drehscheiben axial bewegbar angeordnet. Von Vorteil ist dabei, dass ein möglichst kleiner Luftspalt und eine Zentrierung in einfacher Weise erreichbar ist.

Bei einer vorteilhaften Ausgestaltung ist die Reaktionsfläche aus Aluminium. Von Vorteil ist dabei, dass die Verluste gering sind, insbesondere geringer als bei Verwendung von Stahl.

Bei einer vorteilhaften Ausgestaltung ist die Reaktionsfläche in Fahrtrichtung länger ausgedehnt vorgesehen als der Radius der Drehscheiben. Von Vorteil ist dabei, dass eine ruckarme Bewegung ermöglicht ist, insbesondere beim Übergang von einem solchen Reaktionsteil zum in Bewegungsrichtung nachfolgenden.

Bei einer vorteilhaften Ausgestaltung ist die Reaktionsfläche aus mehreren voneinander in Fahrtrichtung beabstandeten einzelnen Reaktionsflächen zusammengesetzt. Von Vorteil ist dabei, dass die Fahrstrecke auch über Berge und Täler führbar ist, solange der zugehörige Krümmungsradius der Fahrstrecke groß ist gegenüber dem Radius der Drehscheiben.

Bei einer vorteilhaften Ausgestaltung ist an einem Teil ein Loslager vorgesehen. Von Vorteil ist dabei, dass eine Selbstzentrierung der Vorrichtung in einfacher Weise erreichbar ist.

Bei einer vorteilhaften Ausgestaltung ist an einem Teil ein Drehlager vorgesehen. Von Vorteil ist dabei, dass auch eine Selbstzentrierung der relativen Drehlage erreichbar ist.

Bei einer vorteilhaften Ausgestaltung ist die Antriebseinheit über ein Loslager und/oder Drehlager am ersten Teil gelagert. Von Vorteil ist dabei, dass die Antriebseinheit nur in geeigneter Weise gelagert werden muss, um eine automatische Selbstzentrierung zu erreichen.

Bei einer vorteilhaften Ausgestaltung ist die Reaktionsfläche über ein Drehlager und/oder ein Loslager am ersten Teil gelagert ist oder fest verbunden. Von Vorteil ist dabei, dass die Reaktionsfläche mit einer geringen Masse ausführbar ist und somit auch bei hoher Geschwindigkeit eine dynamische Anpassung der axialen Position oder der Drehlage erreichbar ist.

Erfindungsgemäß ist die Drehachse des Drehlagers senkrecht zur Bewegungsrichtung und senkrecht zur Motorachsrichtung angeordnet. Von Vorteil ist dabei, dass seitliche Abweichungen kompensierbar sind und somit auch Kurvenfahrten ausführbar sind - wenn auch mit großem Radius im Vergleich zum Radius der Drehscheiben.

Bei einer vorteilhaften Ausgestaltung lässt das Loslager nur einen Freiheitsgrad in axialer Richtung zu, also Bewegung nur in axialer Richtung. Von Vorteil ist dabei, dass die Selbstzentrierung der Antriebseinheit zum Reaktionsteil ausführbar ist, ohne dass der ganze Wagen axial verschoben werden muss. Somit ist auch eine Schienenführung des Wagens ermöglicht.
Weitere Vorteile ergeben sich aus den Unteransprüchen.

Die Erfindung wird nun anhand von Abbildungen näher erläutert:

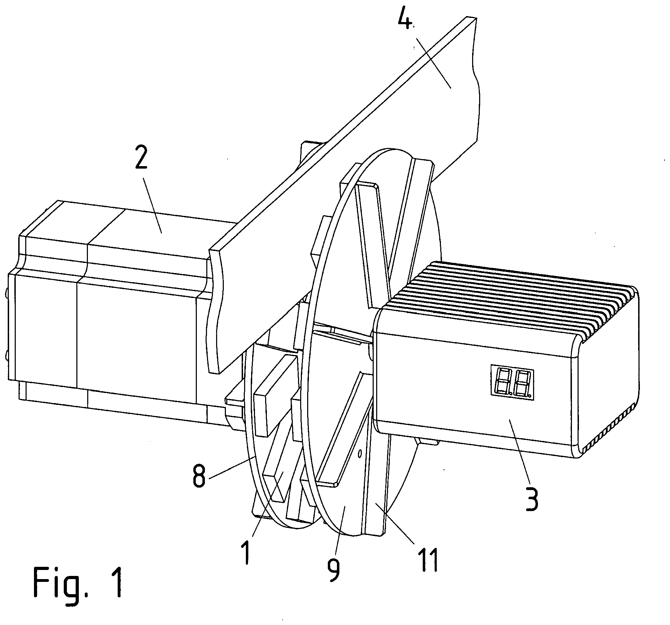

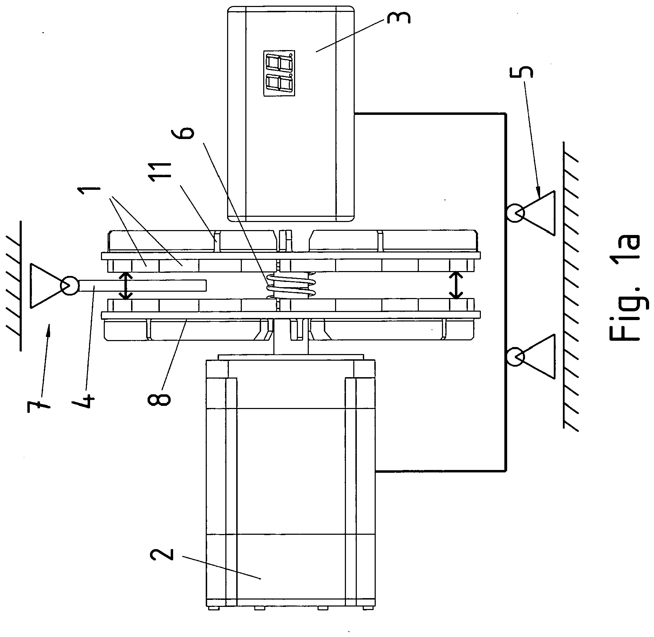

In der Figur 1 ist eine Schrägansicht auf die erfindungsgemäße Transportvorrichtung mit einer Antriebseinheit gezeigt. In Figur 1a ist eine zugehörige Draufsicht gezeigt.

Die Antriebseinheit, umfassend einen Drehscheiben (8,9) antreibenden Elektromotor 2, ist dabei vom ersten Teil der Transporteinheit umfasst, das als Schwert ausgebildete Reaktionsteil vom zweiten Teil der Transporteinheit.

Die Drehzahl des Elektromotors ist über den Umrichter 3 steuerbar oder regelbar. Die Drehscheiben 8 und 9 sind hierbei an den zueinander zugewandten Seiten mit in Umfangsrichtung jeweils abwechselnder magnetischer Orientierung vorgesehenen Magneten versehen. Dabei liegt dem jeweiligen Magneten 1 der ersten Drehscheibe 8 ein entsprechender Magnet 1 der zweiten Drehscheibe 9 in Normalenrichtung gegenüber, wobei die Magnetisierungsrichtung ebenfalls in Normalenrichtung vorgesehen ist. Auf diese Weise ist erreichbar, dass das stationäre Magnetfeld im Wesentlichen parallel zur Achse des Motors und der Drehscheiben im Luftspalt zwischen den Magneten orientiert ist. Die Drehscheiben (8,9) sind in axialer Richtung verschiebbar angeordnet. Zur Drehkraftübertragung ist beispielsweise eine in Umfangsrichtung formschlüssige Verbindung vorteilhaft.

Somit ist eine starke anziehende Kraft hergestellt zwischen den Drehscheiben (8,9). Ein zwischen den Drehscheiben (8,9) angeordnetes Federelement 6 hält die Drehscheiben auf Abstand.

Der erfindungsgemäße Antrieb ist zum Antreiben eines Wagens vorgesehen, an dem ein Schwert 4, insbesondere Aluminiumschwert, vorgesehen ist. Wenn nun die Drehscheiben (8,9) in Drehbewegung versetzt werden, entstehen wirbelstrombedingte Vorschubkräfte, die den Wagen in Fahrtrichtung antreiben, also in Blickrichtung der Figur 1a.

Vorzugsweise ist das Schwert 4 über ein Drehlager 7 am Wagen gelagert, dessen Drehachse senkrecht zur Fahrtrichtung und senkrecht zur Achsrichtung der Elektromotorachse ausgerichtet ist.

Der Elektromotor ist mit den Drehscheiben (8,9) zwar stationär angeordnet, ist hierzu aber über ein Loslager 5 am Untergrund befestigt, das eine Bewegung in axialer Richtung der Motorachse zulässt. Auf diese Weise zentriert sich der Motor 2 derart, dass das Schwert 4 axial mittig zwischen den Drehscheiben (8,9) positioniert ist. Ebenso zentriert das Schwert über das Drehlager 7 sich bezüglich der Drehlage.

Statt nur eines Wagens sind auch mehrere miteinander verbundene Wagen vorsehbar, die jeweils ein Schwert 4 aufweisen. Wenn nun die Schwerter 4 nicht in Fahrtrichtung direkt hintereinander, also in gleicher axialer Position, angeordnet sind, sondern leicht verschiedene axiale Positionen aufweisen, wird bei Eindringen des Schwertes 4 in den Luftspalt zwischen den Magneten 1 der Motor 2 automatisch zentriert und somit werden Querkräfte vermindert.

Die Drehscheiben (8,9) sind mit rippenförmigen radial verlaufenden Versteifungen 11 ausgeführt.

Der oder die Wagen sind schienengeführt oder ohne Schienenführung ausführbar.

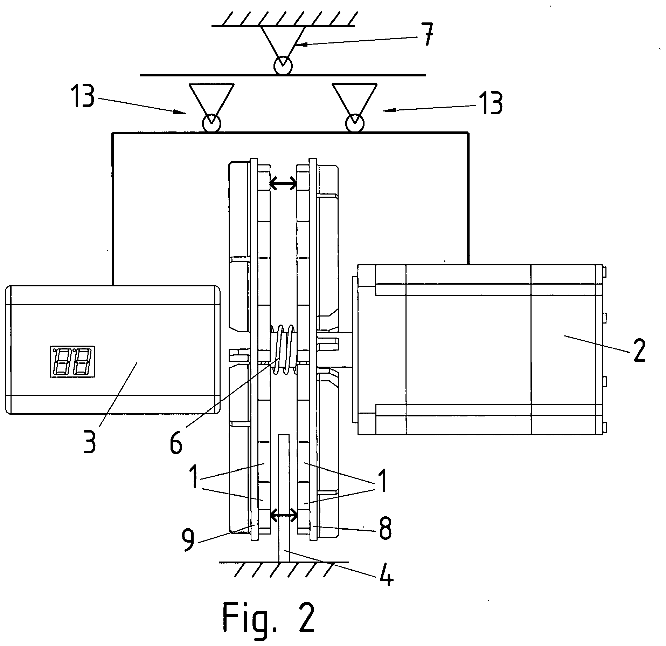

In Figur 2 ist eine Draufsicht auf ein weiteres erfindungsgemäßes Ausführungsbeispiel gezeigt, bei dem am zweiten Teil der Transportvorrichtung das als Schwert ausgeführte Reaktionsteil stationär fest angeordnet ist und die vom ersten Teil der Transportvorrichtung umfasste Antriebseinheit, umfassend den Elektromotor 2 mit Umrichter 3 am Wagen über Loslager 13 sowie ein Drehlager 7 angeordnet ist. Somit zentriert sich die Antriebseinheit des Wagens selbst, indem sie sich über das Loslager 13 relativ zum Wagen derart positioniert, dass das Schwert axial mittig zwischen den Drehscheiben liegt. Mittels des Drehlagers 7 ist auch die Drehlage der Antriebseinheit relativ zum Schwert automatisch zentrierbar.

In anderen erfindungsgemäßen Ausführungsbeispielen ist das Schwert derart radial nah an der Motorwelle vorgesehen, dass mittels Rollen oder auch ohne Rollen eine verschleißarme zusätzliche Zentrierung oder Begrenzung ermöglicht ist. Denn die Relativgeschwindigkeit ist bei kleinem Radius gering. Bei Ausführung einer Begrenzung wird die Feinzentrierung in der vorbeschriebenen Selbstzentrierungsart nach Figur 1 oder 2 ausgeführt, jedoch kommen bei größeren Abweichungen von der mittigen Lage die Begrenzungsmittel, wie Rollen oder dergleichen, zum Einsatz. Die Drehachse dieser Rollen ist vorzugsweise senkrecht zur Fahrtrichtung, also Bewegungsrichtung, und senkrecht zur Motorachsrichtung orientiert

In anderen erfindungsgemäßen Ausführungsbeispielen umfasst der Wagen zusätzlich zur Ausführung nach Figur 2 Rollen, die bei Eintreten des Schwertes in den Luftspalt in Eingriff kommen oder sind, so dass eine Begrenzung oder Führung auf diese Weise ermöglicht ist. Hierbei ist die Drehachse dieser Rollen senkrecht zur Fahrtrichtung, also Bewegungsrichtung, und senkrecht zur Motorachsrichtung orientiert.

### Bezugszeichenliste

1 Magnete
2 Elektromotor
3 Umrichter
4 Schwert, insbesondere Aluminiumschwert
5 Loslager
6 Federelement
7 Drehlager
8 Drehscheibe
9 Drehscheibe
11 Versteifung
13 Loslager

## Patentansprüche

1. Transportvorrichtung, umfassend zwei gegeneinander in Bewegungsrichtung verschiebbar angeordneten Teilen,
**wobei** ein erster Teil eine Antriebseinheit umfasst, die zumindest zwei, von einem Elektromotor (2) angetriebene, axial voneinander beabstandete Drehscheiben (8, 9) umfasst,
wobei an jeder Drehscheibe (8, 9) in Umfangsrichtung voneinander beabstandete Magnete (1) angeordnet sind, die abwechselnd verschiedene Magnetisierungsrichtungen aufweisen,
wobei die Magnetisierungsrichtung der Magnete (1) jeweils in oder entgegen der Motorachsrichtung vorgesehen ist,
wobei jedem Magneten (1) der einen Drehscheibe (8, 9) ein Magnet der anderen Drehscheibe (9, 8) axial gegenüber angeordnet ist, so dass der zugehörige Hauptfluss axial orientiert ist **und zwischen den Drehscheiben (8,9) eine stark anziehende Kraft erzeugt ist,** insbesondere einem Nordpol der ersten Drehscheibe (8, 9) ein Südpol der anderen Drehscheibe (9, 8) gegenübersteht und umgekehrt,
wobei ein zweiter Teil eine Reaktionsfläche, **also** Schwert (4), umfasst, die zur Erzeugung der Vorschubskraft in den Bereich zwischen den Magneten (1), also in den Bereich des Hauptflusses, eintaucht,
**dadurch gekennzeichnet, dass**
die Drehscheiben (8, 9) in axialer Richtung verschiebbar angeordnet sind, wobei **ein Federelement (6) zwischen den Drehscheiben** (8, 9) **angeordnet ist und diese auf Abstand hält entgegen der stark anziehenden Kraft,**
**wobei das Schwert (4) über ein Drehlager (7) am Wagen gelagert ist, dessen Drehachse senkrecht zur Fahrtrichtung und senkrecht zur Achsrichtung der Elektromotorachse ausgerichtet ist,**
**wobei der Elektromotor (2) mit den Drehscheiben (8, 9) zwar stationär angeordnet ist, hierzu aber über ein Loslager (5) am Untergrund befestigt ist, das eine Bewegung in axialer Richtung der Motorachse zulässt.**

2. Transportvorrichtung, umfassend zwei gegeneinander in Bewegungsrichtung verschiebbar angeordneten Teilen,
**wobei** ein erster Teil eine Antriebseinheit umfasst, die zumindest zwei, von einem Elektromotor (2) angetriebene, axial voneinander beabstandete Drehscheiben (8, 9) umfasst,
wobei an jeder Drehscheibe (8, 9) in Umfangsrichtung voneinander beabstandete Magnete (1) angeordnet sind, die abwechselnd verschiedene Magnetisierungsrichtungen aufweisen,
wobei die Magnetisierungsrichtung der Magnete (1) jeweils in oder entgegen der Motorachsrichtung vorgesehen ist,
wobei jedem Magneten (1) der einer Drehscheibe (8, 9) ein Magnet der anderen Drehscheibe (9, 8) axial gegenüber angeordnet ist, so dass der zugehörige Hauptfluss axial orientiert ist **und zwischen den Drehscheiben (8,9) eine stark anziehende Kraft erzeugt ist,** insbesondere einem Nordpol der ersten Drehscheibe (8, 9) ein Südpol der anderen Drehscheibe (9, 8) gegenübersteht und umgekehrt,
wobei ein zweiter Teil eine Reaktionsfläche, **also** Schwert (4), umfasst, die zur Erzeugung der Vorschubskraft in den Bereich zwischen den Magneten (1), also in den Bereich des Hauptflusses, eintaucht,
**dadurch gekennzeichnet, dass**
die Drehscheiben (8, 9) in axialer Richtung verschiebbar angeordnet sind, wobei **ein Federelement (6) zwischen den Drehscheiben** (8, 9) **angeordnet ist und diese auf Abstand hält entgegen der stark anziehenden Kraft,**
**wobei am zweiten Teil der Transportvorrichtung das Schwert (4) stationär fest angeordnet ist und die Antriebseinheit am zweiten Teil, also Wagen, über zwei Loslager (13) sowie ein Drehlager (7) angeordnet ist, so dass sich die Antriebseinheit des Wagens selbst zentriert,**
**indem sie sich über das Loslager (13) relativ zum Wagen derart positioniert, dass das Schwert (4) axial mittig zwischen den Drehscheiben (8, 9) liegt und indem mittels des Drehlagers (7) auch die Drehlage der Antriebseinheit relativ zum Schwert (4) automatisch zentriert** wird.

3. Transportvorrichtung nach Anspruch 1 oder 2,
**dadurch gekennzeichnet, dass**
**die Drehscheiben (8, 9) axial relativ zueinander bewegbar angeordnet sind, wobei also zumindest eine der Drehscheiben axial bewegbar angeordnet ist.**

4. Transportvorrichtung nach einem der vorangegangenen Ansprüche,
**dadurch gekennzeichnet, dass**
die Reaktionsfläche aus Aluminium ist.

5. Transportvorrichtung nach einem der vorangegangenen Ansprüche,
**dadurch gekennzeichnet, dass**
die Reaktionsfläche in Fahrtrichtung länger ausgedehnt vorgesehen ist als der Radius der Drehscheiben (8, 9).

6. Transportvorrichtung nach einem der vorangegangenen Ansprüche,
**dadurch gekennzeichnet, dass**
**die Reaktionsfläche aus mehreren voneinander in Fahrtrichtung beabstandeten einzelnen Reaktionsflächen zusammengesetzt ist.**

7. Transportvorrichtung nach einem der vorangegangenen Ansprüche,
**dadurch gekennzeichnet, dass**
an einem Teil **das** Loslager (5, 13) vorgesehen ist.

8. Transportvorrichtung nach einem der vorangegangenen Ansprüche,
**dadurch gekennzeichnet, dass**
an einem Teil ein Drehlager vorgesehen ist.

9. Transportvorrichtung nach einem der vorangegangenen Ansprüche,
**dadurch gekennzeichnet, dass**
**die Antriebseinheit über ein Loslager (5, 13) und/oder Drehlager am ersten Teil gelagert ist.**

10. Transportvorrichtung nach einem der vorangegangenen Ansprüche,
**dadurch gekennzeichnet, dass**
die Reaktionsfläche über ein Drehlager und/oder ein Loslager (5, 13) am ersten Teil gelagert ist oder fest verbunden ist.

11. Transportvorrichtung nach einem der vorangegangenen Ansprüche,
**dadurch gekennzeichnet, dass**
die Drehachse des Drehlagers senkrecht zur Bewegungsrichtung und senkrecht zur Motorachsrichtung angeordnet ist.

12. Transportvorrichtung nach einem der vorangegangenen Ansprüche,
**dadurch gekennzeichnet, dass**
das Loslager (5, 13) nur einen Freiheitsgrad in axialer Richtung zulässt, also Bewegung nur in axialer Richtung **ermöglicht ist.**

## Claims

1. A transport device comprising two parts arranged so as to be displaceable relative to one another in a motion direction,
wherein a first part comprises a drive unit which comprises at least two rotary discs (8, 9), axially spaced apart and driven by an electric motor (2),
wherein magnets (1), spaced apart in the circumferential direction, are arranged on each rotary disc (8, 9) and alternately have different magnetization directions,
wherein the magnetization direction of the magnets (1) is in each case provided in or counter to the motor axial direction,
wherein each magnet (1) of one rotary disc (8, 9) is arranged axially opposite a magnet of the other rotary disc (9, 8), so that the associated main flux is oriented axially and a strongly attracting force is produced between the rotary discs (8, 9), in particular a north pole of the first rotary disc (8, 9) is opposite a south pole of the other rotary disc (9, 8) and vice-versa,
wherein a second part comprises a reaction surface, i.e. blade (4), which protrudes into the region between the magnets (1), therefore into the region of the main flux, to generate the advancing force,
**characterized in that**
the rotary discs (8, 9) are arranged so as to be displaceable in an axial direction, wherein a spring element (6) is arranged between the rotary discs (8, 9) and keeps the latter spaced apart counter to the strongly attracting force,
wherein the blade (4) is mounted on the carriage via a pivot bearing (7) whose rotational axis is oriented perpendicular to the direction of travel and perpendicular to the axial direction of the electric motor shaft,
wherein although the electric motor (2) with the rotary discs (8, 9) is arranged in a stationary manner, it is however in addition secured to the underlying surface via a movable bearing (5) which permits motion in an axial direction of the motor shaft.

2. A transport device comprising two parts arranged so as to be displaceable relative to one other in a motion direction,
wherein a first part comprises a drive unit which comprises at least two rotary discs (8, 9), axially spaced apart and driven by an electric motor (2),
wherein magnets (1), spaced apart in the circumferential direction, are arranged on each rotary disc (8, 9) and alternately have different magnetization directions,
wherein the magnetization direction of the magnets (1) is in each case provided in or counter to the motor axial direction,
wherein each magnet (1) of one rotary disc (8, 9) is arranged axially opposite a magnet of the other rotary disc (9, 8), so that the associated main flux is oriented axially and a strongly attracting force is produced between the rotary discs (8, 9), in particular a north pole of the first rotary disc (8, 9) is opposite a south pole of the other rotary disc (9, 8) and vice-versa,
wherein a second part comprises a reaction surface, i.e. blade (4), which protrudes into the region between the magnets (1), therefore into the region of the main flux, to generate the advancing force,
**characterised in that**
the rotary discs (8, 9) are arranged so as to be displaceable in an axial direction, wherein a spring element (6) is arranged between the rotary discs (8, 9) and keeps the latter spaced apart counter to the strongly attracting force,
wherein the blade (4) is fixedly arranged in a stationary manner on the second part of the transport device and the drive unit is arranged on the second part, therefore carriage, via two movable bearings (13) and a pivot bearing (7), so that the drive unit of the carriage self centres itself, **in that** via the movable bearing (13) it positions itself relative to the carriage in such a manner that the blade (4) lies axially centrally between the rotary discs (8, 9) and **in that** the rotational position of the drive unit relative to the blade (4) is also automatically centred by means of the pivot bearing (7).

3. A transport device according to claim 1 or 2,
**characterized in that**
the rotary discs (8, 9) are arranged so as to be axially movable relative to one another, wherein therefore at least one of the rotary discs is arranged in an axially movable manner.

4. A transport device according to any one of the preceding claims,
**characterized in that**
the reaction surface is made of aluminium.

5. A transport device according to any one of the preceding claims,
**characterized in that**
the reaction surface is longer in extension in the direction of travel than the radius of the rotary discs (8, 9).

6. A transport device according to any one of the preceding claims,
**characterized in that**
the reaction surface is made up of a plurality of individual reaction surfaces spaced apart in the direction of travel.

7. A transport device according to any one of the preceding claims,
**characterized in that**
the movable bearing (5, 13) is provided on a part.

8. A transport device according to any one of the preceding claims,
**characterized in that**
a pivot bearing is provided on a part.

9. A transport device according to any one of the preceding claims,
**characterized in that**
the drive unit is mounted on the first part via a movable bearing (5, 13) and/or pivot bearing.

10. A transport device according to any one of the preceding claims,
**characterized in that**
the reaction surface is mounted on the first part via a pivot bearing and/or a movable bearing (5, 13) or is securely connected thereto.

11. A transport device according to any one of the preceding claims,
**characterized in that**
the rotational axis of the pivot bearing is arranged perpendicular to the motion direction and perpendicular to the motor axial direction.

12. A transport device according to any one of the preceding claims,
**characterized in that**
the movable bearing (5, 13) only permits one degree of freedom in an axial direction, therefore only motion in an axial direction is made possible.

## Revendications

1. Dispositif de transport, comprenant deux parties disposées à translation l'une par rapport à l'autre dans la direction de déplacement,
sachant qu'une première partie comprend une unité d'entraînement, qui comprend au moins deux disques rotatifs (8, 9) axialement distants entre eux et entraînés par un moteur électrique (2),
sachant que des aimants (1) distants entre eux en direction périphérique, qui présentent alternativement des directions de magnétisation différentes, sont disposés sur chaque disque rotatif (8, 9),
sachant que la direction de magnétisation des aimants (1) est respectivement prévue dans la direction de l'axe du moteur ou en direction opposée,
sachant qu'à chaque aimant (1) de l'un des disques rotatifs (8, 9) est opposé axialement un aimant de l'autre disque rotatif (9, 8), de sorte que le flux principal correspondant est orienté axialement et qu'une force à forte attraction est produite entre les disques rotatifs (8, 9), en particulier qu'un pôle nord du premier disque rotatif (8, 9) fait face à un pôle sud de l'autre disque rotatif (9, 8), et inversement,
sachant qu'une deuxième partie comprend une surface de réaction, donc une lame (4), qui afin de produire la force d'avancement s'enfonce dans la région située entre les aimants (1), donc dans la région du flux principal,
**caractérisé en ce que** les disques rotatifs (8, 9) sont disposés à translation en direction axiale, sachant qu'un élément formant ressort (6) est disposé entre les disques rotatifs (8, 9) et maintient ceux-ci à distance à l'encontre de la force à forte attraction,
sachant que la lame (4) est montée sur le véhicule par l'intermédiaire d'un palier rotatif (7) dont l'axe de rotation est orienté perpendiculairement à la direction de marche et perpendiculairement à la direction axiale de l'axe du moteur électrique,
sachant que le moteur électrique (2) pourvu des disques rotatifs (8, 9) est certes disposé stationnairement, mais est fixé à cet effet sur le sol par l'intermédiaire d'un palier libre (5) qui autorise un mouvement dans la direction axiale de l'axe du moteur.

2. Dispositif de transport, comprenant deux parties disposées à translation l'une par rapport à l'autre dans la direction de déplacement,
sachant qu'une première partie comprend une unité d'entraînement, qui comprend au moins deux disques rotatifs (8, 9) axialement distants entre eux et entraînés par un moteur électrique (2),
sachant que des aimants (1) distants entre eux en direction périphérique, qui présentent alternativement des directions de magnétisation différentes, sont disposés sur chaque disque rotatif (8, 9),
sachant que la direction de magnétisation des aimants (1) est respectivement prévue dans la direction de l'axe du moteur ou en direction opposée,
sachant qu'à chaque aimant (1) de l'un des disques rotatifs (8, 9) est opposé axialement un aimant de l'autre disque rotatif (9, 8), de sorte que le flux principal correspondant est orienté axialement et qu'une force à forte attraction est produite entre les disques rotatifs (8, 9), en particulier qu'un pôle nord du premier disque rotatif (8, 9) fait face à un pôle sud de l'autre disque rotatif (9, 8), et inversement,
sachant qu'une deuxième partie comprend une surface de réaction, donc une lame (4), qui afin de produire la force d'avancement s'enfonce dans la région située entre les aimants (1), donc dans la région du flux principal,
**caractérisé en ce que** les disques rotatifs (8, 9) sont disposés à translation en direction axiale, sachant qu'un élément formant ressort (6) est disposé entre les disques rotatifs (8, 9) et maintient ceux-ci à distance à l'encontre de la force à forte attraction,
sachant que la lame (4) est disposée stationnairement et fixement sur la deuxième partie du dispositif de transport et que l'unité d'entraînement est disposée sur la deuxième partie, donc le véhicule, par l'intermédiaire de deux paliers libres (13) ainsi que d'un palier rotatif (7), de sorte que l'unité d'entraînement du véhicule se centre d'elle-même,
par le fait que, par l'intermédiaire du palier libre (13), elle se positionne par rapport au véhicule de telle sorte que la lame (4) se situe axialement au milieu entre les disques rotatifs (8, 9), et par le fait qu'au moyen du palier rotatif (7), la position de rotation de l'unité d'entraînement par rapport à la lame (4) est également automatiquement centrée.

3. Dispositif de transport selon la revendication 1 ou 2, **caractérisé en ce que** les disques rotatifs (8, 9) sont disposés à déplacement axial l'un par rapport à l'autre, sachant donc qu'au moins un des disques rotatifs est disposé à déplacement axial,

4. Dispositif de transport selon l'une des revendications précédentes, **caractérisé en ce que** la surface de réaction est en aluminium.

5. Dispositif de transport selon l'une des revendications précédentes, **caractérisé en ce que** la surface de réaction est prévue d'une longueur dans la direction de marche supérieure au rayon des disques rotatifs (8, 9).

6. Dispositif de transport selon l'une des revendications précédentes, **caractérisé en ce que** la surface de réaction est composée de plusieurs surfaces de réaction individuelles distantes entre elles dans la direction de marche.

7. Dispositif de transport selon l'une des revendications précédentes, **caractérisé en ce que** le palier libre (5, 13) est prévue sur une partie.

8. Dispositif de transport selon l'une des revendications précédentes, **caractérisé en ce qu'**un palier rotatif est prévu sur une partie.

9. Dispositif de transport selon l'une des revendications précédentes, **caractérisé en ce que** l'unité d'entraînement est montée sur la première partie par l'intermédiaire d'un palier libre (5, 13) et/ou d'un palier rotatif.

10. Dispositif de transport selon l'une des revendications précédentes, **caractérisé en ce que** la surface de réaction est fixement reliée à la première partie ou est montée sur la première partie par l'intermédiaire d'un palier rotatif et/ou d'un palier libre (5, 13).

11. Dispositif de transport selon l'une des revendications précédentes, **caractérisé en ce que** l'axe de rotation du palier rotatif est disposé perpendiculairement à la direction de déplacement et perpendiculairement à la direction de l'axe du moteur.

12. Dispositif de transport selon l'une des revendications précédentes, **caractérisé en ce que** le palier libre (5, 13) autorise un seul degré de liberté en direction axiale, donc seul un déplacement en direction axiale est rendu possible.
